# EUROPÄISCHE PATENTSCHRIFT

(11) **EP 0 932 876 B1**
(45) Veröffentlichungstag und Bekanntmachung des Hinweises auf die Patenterteilung: **09.01.2002**
(21) Anmeldenummer: 97913154.7
(22) Anmeldetag: 17.10.1997
(51) Int. Cl.: G06F 17/60

(54) **SYSTEM UND VERFAHREN ZUM DATENAUSTAUSCH IN EINEM NETZWERK**
SYSTEM AND METHOD FOR EXCHANGING DATA IN A NETWORK
PROCEDE ET SYSTEME D'ECHANGE DE DONNEES DANS UN RESEAU

(30) Priorität: 18.10.1996 DE 19643166; 04.06.1997 DE 19723479
(43) Veröffentlichungstag der Anmeldung: 04.08.1999
(73) Patentinhaber: DCI Datenbank Für Wirtschaftsinformationen GmbH, 82319 Starnberg (DE)
(72) Erfinder: MOHR, Michael, D-82319 Starnberg (DE)
(74) Vertreter: Grättinger & Partner (GbR)
(86) Internationale Anmeldenummer: EP9705736
(87) Internationale Veröffentlichungsnummer: WO9818093

(56) Entgegenhaltungen:
- EP-A- 0 370 146
- WO-A-97/31322
- US-A- 4 992 940
- "ANONYMOUS DELIVERY OF GOODS IN ELECTRONIC COMMERCE" IBM TECHNICAL DISCLOSURE BULLETIN, Bd. 39, Nr. 3, März 1996, Seiten 363-366, XP002050209

## Beschreibung

Die vorliegende Erfindung betrifft ein System zum Datenaustausch in einem Netzwerk, welches mindestens einen einen Datenspeicher aufweisenden zentralen Server, der mit einer Eingabeanschlußeinheit und einer Ausgabeanschlußeinheit versehen ist, und mindestens einen Client und einen Datenanbieter zur Eingabe und/oder zum Abrufen von Dateninformationen in den oder aus dem Datenspeicher des zentralen Servers umfaßt, wobei Endgeräte des mindestens einen Clients und des mindestens einen Datenanbieters über ein Netzwerk mit der Eingabe- und/oder der Ausgabeanschlußeinheit des zentralen Servers verbindbar sind. Die vorliegende Erfindung betrifft des weiteren ein Verfahren zum Datenaustausch in einem Netzwerk, welches mindestens einen Client, einen zentralen Server und einen Datenanbieter aufweist, wobei eine Datenanfrage eines Client an den zentralen Server geleitet und von diesem bei gleichzeitiger Übermittlung einer Netzwerkadresse für die Rückantwort an mögliche Datenanbieter weitergeleitet wird.

Im Stand der Technik sind bereits verschiedene Systeme und Verfahren zum Datenaustausch in Netzwerken bekannt.

So beschreibt beispielsweise die WO96/3896 ein Informationssystem mit einem Datenspeicher, der über Nachrichtenübertragungswege mit Teilnehmerstationen verbunden ist. Über die im Datenspeicher gespeicherten Informationsdaten werden automatisch Kurzinformationen an Teilnehmer übertragen, die daraufhin ausgewählte Informationen abrufen können. Dabei dient die Online-Datenbank in erster Linie als Datenspeicher zur Bereitstellung von Daten für den Abruf durch Datensuchende, wobei diese lediglich aus dem bereits auf der Datenbank vorhandenen Angebot auswählen können.

Die EP 0370146 A1 beschreibt ein interaktives Marktmanagementsystem, bei welchem mehrere Verkäufer und Käufer durch eine Netzwerkdatenbank direkt miteinander in Verbindung treten können.

Des weiteren offenbart die WO95/12176 ein Informationsverarbeitungssystem zum Auffinden von Informationen durch Verwendung eines Computer-Netzwerkes, wobei ein Makler Zugang zu mehreren Datenbanken erlangen kann. Hierdurch kann der Makler auf Anfrage eines Datensuchenden manuell gezielt Angebote von Datenanbietern heraussuchen und dem Datensuchenden präsentieren.

Die EP 0639018 A2 offenbart ein System zur Datenübertragung, bei welchem jeweils zwischen einem Sender und einem Empfänger Informationsdaten zeitselektiv in bestimmten Zeitfenstern gesendet oder empfangen werden.

Weitere Verfahren zum Datenaustausch sind beispielsweise in der US 5392336, WO95/10913 und EP 0716532 A2 sowie der DE-OS 3122348 dargestellt.

Eine ältere, jedoch nachveröffentlichte teuropäische Patentanmeldung ist aus der internationalen Patentanmeldung PCT/US97/04133, Veröffentlichungsnummer WO97/31322 hervorgegangen. Diese Anmeldung beschreibt ein System zum Datenaustausch in einem Netzwerk, welches mindestens einen einen Datenspeicher aufweisenden zentralen Server, der mit einer Eingabeanschlußeinheit und einer Ausgabeanschlußeinheit versehen ist, und mindestens einen Client und mindestens einen Datenanbieter zur Eingabe und/oder zur Abrufen von Dateninformationen in den oder aus dem Datenspeicher des zentralen Servers umfaßt, wobei Endgeräte des mindestens einen Client und des mindestens einen Datenanbieters über ein Netzwerk mit der Eingabeanschlußeinheit bzw. der Ausgabeanschlußeinheit des zentralen Servers verbindbar sind. Der Server weist dabei Module zur automatischen Auswahl von Datenanbietern in Abhängigkeit von einer Anfrage eines Clients und zur automatischen Weiterleitung der Anfrage an die Datenanbieter auf. Das in jener älteren europäischen Patentanmeldung offenbarte Verfahren zum Datenaustausch in einem Netzwerk, das mindestens einen Client, einen zentralen Server und einen Datenanbieter umfaßt, weist dabei die folgenden Schritte auf:
1. Datenanfrage eines Clients an den zentralen Server.
2. Erstellen einer Liste möglicher Anbieter aus einem Anbieterpool durch den Server in Abhängigkeit von den angefragten Daten.
3. Verbindungsaufbau und Übermittlung der Datenanfrage an mögliche Datenanbieter bei gleichzeitiger Übermittlung einer Netzwerkadresse für die Rückantwort.
4. Empfang der gewünschten Daten von zumindest einem Teil der möglichen Datenanbieter durch den zentralen Server.
5. Sammeln der gewünschten Dateninformation oder Datenteilinformation durch den zentralen Server und Weiterleitung an den Client.

Vor dem Hintergrund des vorstehend aufgezeigten Standes der Technik ist es Aufgabe der vorliegenden Erfindung, ein System und ein Verfahren zum Datenaustausch in einem Netzwerk zur Verfügung zu stellen, welches bei einer gezielten Datenanfrage an einen zentralen Server schnell und zuverlässig ein umfassendes, leicht auswertbares Ergebnis liefert, was konkret die Anfrage beantwortet, wobei sich das System und das Verfahren insbesondere für die Durchführung von Ausschreibungen für Waren mit sich schnell ändernden Preisen eignen sollen.

Diese Aufgabe wird durch ein System und ein Verfahren zum Datenaustausch mit den Merkmalen der Ansprüche 1 und 9 gelöst. Vorteilhafte Ausgestaltungen sind in den Unteransprüchen beschrieben.

Das erfindungsgemäße System zum Datenaustausch in einem Netzwerk sieht mindestens einen zentralen Server mit einem Datenspeicher vor, der mit einer Eingabe-Anschluß-Einheit und einer Ausgabe-Anschluß-Einheit versehen ist und mindestens einen Client und einen Datenanbieter zur Eingabe und/oder zum Abrufen von Dateninformation in den oder aus dem Datenspeicher des zentralen Servers aufweist. Dabei weist der Server ein Modul zur automatischen Zuleitung der Anfragen eines Clients an ausgewählte Anbieter auf. Den ausgewählten Datenanbietern wird dabei zugleich ein von dem Client für die Bereitstellung der gewünschten Dateninformationen gesetztes Zeitlimit mitgeteilt. Als Modul wird dabei eine Hardware/Software zur Steuerung interner Schaltvorgänge des Servers bezeichnet. Die automatische Auswahl der Anbieter erfolgt dabei in Abhängigkeit von der Anfrage des Clients, d.h. beispielsweise, daß der Server die Datenbank nach Anbietern der vom Client angefragten Dateninformation absucht und nur an diese die Anfrage weiterleitet. Auf diese Weise wird schnell und einfach eine große Anzahl von möglichen Anbietern zuverlässig erreicht. Zur Einhaltung einer größtmöglichen Aktualität werden an den Client diejenigen Dateninformationen weitergeleitet, die bis zu dem vom Client gesetzten Zeitlimit bei dem zentralen Server eingegangen sind.

Gemäß einer bevorzugten Ausführungsform handelt es sich bei der vom Client (Datensuchenden) erfragten Dateninformation um Angebote für bestimmte Produkte oder Dienstleistungen. Auf diese Weise wird ein Datenanbieter zur Abgabe eines Angebotes angeregt, falls ein Datensuchender Angebote für ein bestimmtes Produkt oder eine Dienstleistung wünscht.

Noch eine vorteilhafte Weiterbildung sieht vor, daß der Server ein Modul zur verdeckten Zuleitung von Datenanfragen eines Clients an Datenanbieter aufweist, so daß der ausgewählte Datenanbieter keine Information über den Client erhält. Dadurch wird der Datenanbieter, der beispielsweise per Fax angefragt wurde, gezwungen auf die vom System bevorzugte Kommunikationsart (beispielsweise über Eintrag in einer Webseite) überzugehen.

Weiterhin sieht eine vorteilhafte Ausführungsform vor, daß die Anfragen durch den Server nach Regionen ausgewählten Anbietern zugeleitet werden. Dadurch ist eine weitere Steuerungsmöglichkeit durch das Informationssystem gegeben. Beispielsweise kann durch diese Maßnahme Rücksicht auf regional unterschiedliche allgemeine Qualitätsstandards der Anbieter genommen werden.

Indem eine Benachrichtigung eines Datenanbieters vorgesehen ist, wenn eine Anfrage eines Clients nach einer vorbestimmbaren Zeit unbeantwortet bleibt, ist zuverlässig dafür gesorgt, daß sämtliche Clients gezielt mit Informationen versorgt werden. Durch die Benachrichtigung wird der betreffende Anbieter zuverlässig auf das Vorhandensein eines Datensuchenden (Clients) aufmerksam gemacht und veranlaßt, daraufhin die Übermittlung der gewünschten Dateninformationen an den Client vorzunehmen. Die Zeitspanne bis zur erneuten Benachrichtigung kann dabei entweder vom System voreingestellt oder durch den Client gewählt werden. Durch eine im Server vorhandene Zählstatistik, können Anbieter, die nur selten oder nie auf Anfragen reagieren von der Information über weitere Angebotsnachfragen ausgeschlossen werden.

Das erfindungsgemäße System ist besonders vorteilhaft als Verkaufsförderungssystem einsetzbar. Der Datenspeicher wird von Anbietern mit Produkt- oder Dienstleistungsinformationen in an sich bekannter Weise über herkömmliche Informationsübertragungseinrichtungen wie beispielsweise TV-Decoder eines interaktiven Fernsehens, Faxgeräte, PC-Modemkombinationen, PC-ISDN-Geräte oder andere Endgeräte herkömmlicher Datennetze gefüttert. Die in den Datenspeicher einzuspeichernden Informationen bestehen beispielsweise aus aktuellen Preis- und Produktinformationen, technischen Daten, Firmeninformationen und Vertriebs- und Handelsinformationen. Durch Online-Verbindungen zu weiteren bestehenden Datenbanken kann der Datenanbieter seine Dateninformation mit zusätzlichen, für einen potentiellen Interessenten wichtigen Informationen ergänzen. So kann die Dateninformation beispielsweise mit Werbeanzeigen, redaktionellen Beiträgen, Testberichten und weiteren wissenswerten Informationen verknüpft sein. Nachdem der Datenanbieter die in den Datenspeicher einzulesende Dateninformation zusammengestellt hat, überträgt er diese zum Datenspeicher. Dies geschieht beispielsweise in an sich bekannter Weise über das bestehende Telefon-, ISDN-, DATEX-Netz oder dgl.

Eine vorteilhafte Weiterbildung des Systems sieht vor, daß der Server ein Modul zur automatischen Konvertierung und Formatierung von Daten aufweist. Dies ermöglicht beispielsweise die Umwandlung einer e-mail-Nachricht eines Clients in ein Fax- oder HTML-Format, so daß die Anfrage von einem Anbieter empfangen werden kann, der sich dieser Datenformate bedient.

Außerdem ist es vorteilhaft, daß der Server mit externen Datenbanken verbunden ist, über die zusätzliche Informationen abgefragt werden können. Dies können weitere produktspezifische Datenbanken oder aber Informations- und Handelsdatenbanken, wie z.B. Creditreform, Zolldatenbanken etc. sein.

Das erfindungsgemäße Verfahren zum Datenaustausch in einem Netzwerk weist mindestens einen Client (Datensuchenden), einen zentralen Server und einen Datenanbieter auf, wobei das Verfahren des weiteren folgende Schritte aufweist:
1. Datenanfrage eines Clients an den zentralen Server unter Mitteilung eines vom Client für die Bereitstellung der Dateninformation gesetzten Zeitlimits.
2. Erstellen einer Liste möglicher Anbieter aus einem Anbieterpool durch den Server in Abhängigkeit von den angefragten Daten.
3. Verbindungsaufbau durch den Server und Übermittlung der Datenanfrage an mögliche Datenanbieter bei gleichzeitiger Übermittlung einer Netzwerkadresse für die Rückantwort.
4. Empfang der gewünschten Daten von zumindest einem Teil der möglichen Datenanbieter durch den zentralen Server.
5. Sammeln der bis zu dem von dem Client gesetzten Zeitlimit beim Server eingegangenen gewünschten Dateninformation oder Datenteilinformation durch den zentralen Server und Weiterleitung an den Client.

Bei dem Netzwerk kann es sich beispielsweise um das Internet handeln. Die Steuerung der wesentlichen Verfahrensabläufe erfolgt vom zentralen Server, der neben entsprechender Zugangssoftware für den Online-Betrieb eine Datenbank, beispielsweise eine SQL-Datenbank, und Filter zum Konvertieren unterschiedlichster Datenformate aufweist. Des weiteren ist der Server zum automatischen Verbindungsaufbau mit Datenanbietern vorbereitet.

Zunächst stellt ein Datensuchender eine Online-Verbindung zu dem zentralen Server her und übermittelt eine Datenanfrage. Die Datenanfrage erfolgt dabei beispielsweise über ein geeignetes Terminalprogramm oder einen Internet-Browser. Die Datenanfrage kann z.B. eine Warenanfrage spezifiziert nach Produktart oder Produkt sein.

Der zentrale Server erstellt anhand der Datenanfrage des Datensuchenden durch Verknüpfen der Suchbegriffe mit Indexangaben eine Liste möglicher Anbieter. Im Falle der automatischen Angebotseinholung können die angefragten Daten bzw. Produkte mit den am Server als Begriff gelisteten Produktbezeichnungen verglichen werden. Die gelisteten Produktbezeichnungen sind mit Anbieteradressen in der Adressliste verknüpft. Treten keine Übereinstimmungen zwischen angefragten und gelisteten Produktbezeichnungen auf, so sucht der Server in der das gesuchte Produkt enthaltenden Produktgruppe. Tritt auch hier keine Übereinstimmung auf, so werden alle Produktanbieter angefragt. Es handelt sich daher um eine heuristisch arbeitende intelligente Listenerstellung. Vorteil ist hierbei, daß die Wahrscheinlichkeit der negativen Antworten auf eine Datenanfrage beschränkt wird, d.h. die Datensuche wird optimiert. Bei der automatischen Erstellung der Anbieterliste wird gleichzeitig die Kommunikationsart nach den Möglichkeiten des Datenanbieters gewählt, d.h. wenn dieser keine E-mail-Adresse besitzt, wird beispielsweise ein Fax verschickt. Dabei wird die Datenanfrage übermittelt und gleichzeitig eine Netzwerkadresse des zentralen Servers für die Rückantwort angegeben. Dabei kann die Datenanfrage entweder konkret spezifiziert sein oder aber grob umrissen und erst nach Rückfrage des Anbieters vollständig.

Die gewünschten Daten werden dann von den Datenanbietern ermittelt und an die Netzwerkadresse des zentralen Servers übertragen. Dies sind im Falle der automatischen Angebotseinholung die Angebote für die angefragten Produkte.

Der zentrale Server sammelt die von einzelnen Datenanbietern abgegebene Information und stellt sie in einer vom Datensuchenden lesbaren Form zusammen. Im Falle der Angebotseinholung kann auch ein Sortieren, z.B. nach dem Preis stattfinden. Schließlich wird die so bearbeitete Dateninformation verschiedener Datenanbieter an den Client per E-mail, Fax oder in einem verabredeten Standardformat weitergeleitet.

Vorteil des beschriebenen Verfahrens ist es, daß der Client (Datensuchende) lediglich eine Anfrage erstellt und daraufhin automatisch die Rückantwort einer Vielzahl von Datenanbietern erhält.

Das Verfahren kann auch mit mehreren Clients, Servern und Datenanbietern gleichzeitig durchgeführt werden.

Das Verfahren zum Datenaustausch sieht vor, daß der Server nach Ablauf des vom Client für die Bereitstellung der Dateninformation gesetzten Zeitlimits keine neuen Dateninformationen mehr annimmt und die bereits eingegangenen Dateninformationen an den Client weiterleitet. Das vom Client gesetzte Zeitlimit wird mit der Datenanfrage vom Server an die möglichen Datenanbieter weitergeleitet und die Netzwerkadresse für die Rückantwort für Eingänge weiterer Dateninformationen ab Zeitablauf gesperrt. Die Dateninformation wird dann innerhalb kürzester Zeit vom Server automatisch zusammengestellt und in einem Standardformat an den Client weitergeleitet. Auf diese Weise kann der Datensuchende (Client) innerhalb kürzester Zeit eine große Menge von Dateninformation verschiedener Datenanbieter beziehen und vergleichen. Dies ist beispielsweise bei Ausschreibungen für Waren mit sich schnell ändernden Preisen von großer Bedeutung.

Bei einer vorteilhaften Weiterbildung des Verfahrens werden Vorgaben des Clients bei der automatischen Erstellung der Liste möglicher Datenanbieter berücksichtigt. Die hier gemeinten Vorgaben können insbesondere Ergänzungen der Anbieterliste des Servers bzw. Einschränkungen oder Ausschluß gewisser Datenanbieter beinhalten. Die Vorgaben können aber auch eine Beschränkung auf gewisse geographische Gebiete, aus denen Datenanbieter ausgewählt werden sollen, Vorgaben bezüglich Zahlungsmodalitäten oder aber auch einfach Vorgaben bezüglich der Datenrückführung sein. Außerdem kann die am zentralen Server vorhandene Liste von Anbietern durch Angaben des Datensuchenden erweitert werden.

Eine weitere vorteilhafte Ausbildung des Verfahrens sieht vor, daß die Dateninformation durch den zentralen Server konvertiert und formatiert wird. Dies betrifft z.B. die Umwandlung der Datenfrage in ein Faxformat oder die Formatierung und Aufbereitung der Dateninformation vor der Rückführung zum Client (Datensuchenden).

Noch eine weitere vorteilhafte Ausführungsform sieht vor, daß vom zentralen Server mehrere Anfragen verschiedener Clients parallel bearbeitet werden. D.h., der Server ist für Mehrbenutzer (Multiuser)-Betrieb eingerichtet. Dadurch kann das oben beschriebene Verfahren mehrfach parallel zueinander ablaufen.

Vorteilhaft ist auch, daß bei der Erstellung der Liste möglicher Datenanbieter Adresslisten externer Datenbanken abgefragt werden können. Hierzu muß gegebenenfalls eine Konvertierung in ein Standardformat, wie beispielsweise X 500, stattfinden.

Eine weitere vorteilhafte Ausgestaltung sieht vor, daß Datenanfragen eines Clients vom zentralen Server in Sprach-, Fax- oder E-Mail-Anfragen an die Datenanbieter konvertiert werden.

Noch eine vorteilhafte Ausführungsform sieht vor, daß vom zentralen Server eine automatische Passwortvergabe an den Datenanbieter erfolgt. Hierdurch wird sichergestellt, daß nur berechtigte Datenanbieter ihre Dateninformation als Angebot abgeben können. Beim Zugang zu der Netzwerkadresse des Servers wird daher eine Prüfeinrichtung durchlaufen, welche eine entsprechende Passwortabfrage enthält. Vom Client durch eine Vorauswahl ausgeschlossene Datenanbieter erhalten kein Passwort und können somit kein Angebot abgeben. Ein virtueller Verkäufer (Datenanbieter) kann beispielsweise morgens sein Paßwort eingeben und bekommt dann am Terminal automatisch die ihn betreffenden Anfragen angezeigt.

Außerdem sieht eine vorteilhafte Weiterbildung des Verfahrens vor, daß der zentrale Server für jeden Datenanbieter automatisch eine virtuelle Web-Seite erzeugt. Dies bedeutet, daß unter der vom Server angegebenen Netzwerkadresse zunächst eine Paßwortabfrage erfolgt und danach eine Bildschirm-Maske erscheint, in die der Anbieter sein Angebot eintragen kann. Dabei bleibt die Maske bei allen Anbietern für die Datenanfrage die gleiche. Die eingetragenen Daten werden jedoch vom Server unter dem für das jeweilige Paßwort eingetragenen Anbieter gespeichert und sind beim nächsten Aufruf der Web-Seite durch einen weiteren Datenanbieter nicht mehr sichtbar.

Weiterhin sieht eine vorteilhafte Weiterbildung des Verfahrens vor, daß die Dateninformation in die vom Server automatisch erzeugte virtuelle Web-Seite eingetragen wird. Dabei ist jedem Datenanbieter eine individuelle virtuelle Web-Seite zur Abgabe seines Angebotes zugeordnet. Konkret wird bei Anwahl der Netzwerkadresse des Servers durch den Datenanbietenden zunächst das individuelle Passwort jedes einzelnen Datenanbieters abgefragt und dieser dann mit seiner individuellen Homepage verbunden. Die Angebotsabgabe erfolgt immer, ohne daß der Datenanbieter die Angebote anderer Datenanbieter einsehen kann.

Eine weitere Ausbildung des Verfahrens sieht vor, daß Empfang und Bearbeitung der Datenanfrage seitens des Datenanbieters sowie Eintragung der Dateninformation in die Web-Seite durch einen automatischen Prozeß, beispielsweise einen Mailroboter erfolgt. Unter einem Mailroboter ist ein programmgesteuerter Computer zu verstehen, der eingehende Anfragen über einen vorgegebenen Algorithmus abarbeitet und in standardisierter Form automatisch beantwortet. Das Verfahren kann damit sogar soweit automatisiert werden, daß der Mailroboter (und damit der Datenanbieter) selbständig Datenanfragen vom zentralen Server abholt (d.h. empfängt) und beantwortet. Dies setzt voraus, daß der Datenanbieter eine standardisierte Schnittstelle zu dem zentralen Server hat und daß alle erforderlichen Informationen, wie z.B.

Artikelnummer, Kundennummer, Zeitlimit, Passwort und Netzwerkadresse in einem standardisierten Format übertragen werden.

Weiterhin können mehrere zentrale Server im Netzwerk vorgesehen sein, wobei die zentralen Server untereinander synchronisiert werden. Dadurch wird ein schneller Zugang zum nächstgelegenen zentralen Server sichergestellt und der Zugang zu Dateninformation von Datenanbietern weltweit möglich.

Außerdem sieht eine vorteilhafte Ausführungsform die Verwendung einer Benutzeroberfläche zur Offline-Erstellung von Datenanfragen an den zentralen Server durch den Datensuchenden vor. Damit sind das Vergleichen und die Kalkulation eingehender Dateninformation sofort möglich.

Schließlich eignet sich das beschriebene Verfahren vorteilhaft für die Verwendung zur automatischen Angebotseinholung von Waren, wobei vom Server zusätzlich zu den gelisteten Produktbezeichnungen Index-Produktnummern erzeugt werden. Dies geschieht im Hintergrund mittels einer Nummerntabelle (Matrix), die Produktnummern speichert und verwaltet. Innerhalb der Matrix werden unterschiedliche Produktnummern verschiedener Anbieter, die aber gleiche Artikel bezeichnen, miteinander verknüpft und indiziert, d.h. einer Index-Produktnummer des Servers zugeordnet. Um in die Matrix neue Artikel aufnehmen und bestehende Artikel pflegen zu können, wird die Matrix automatisch aufgebaut und erweitert. Dies geschieht durch "Abfangen" von neuen Produktnummern des Anbieters, die beispielsweise bei Abgabe von Angeboten für Ausweichartikel oder Nachfolgeartikel auftreten. Im Falle der Angebotseinholung bedeutet das, daß die unterschiedlichen Produktnummern von Datenanfragenden und verschiedenen Anbietern für ein und dasselbe Produkt mit einheitlichen Produktnummern (Indices) auf dem zentralen Server verknüpft sind. Hierdurch lassen sich die Verfahrensschritte leichter automatisieren, da bei Anfragen unter Verwendung von beim Anbieter installierten automatischen Prozessen zum Datenempfang (z.B. Mailroboter) die korrekten Produktnummern des Anbieters angegeben werden können.

Im folgenden werden Ausführungsbeispiele der vorliegenden Erfindung mit Bezug auf die beigefügten Zeichnungen beschrieben. Dabei zeigen:
- Fig. 1: die schematische Darstellung eines Ausführungsbeispiels des erfindungsgemäßen Systems zum Datenaustausch und
- Fig. 2: den Ablauf eines Verfahrens der erfindungsgemäßen Art zur automatischen Angebotseinholung in einem Netzwerk.

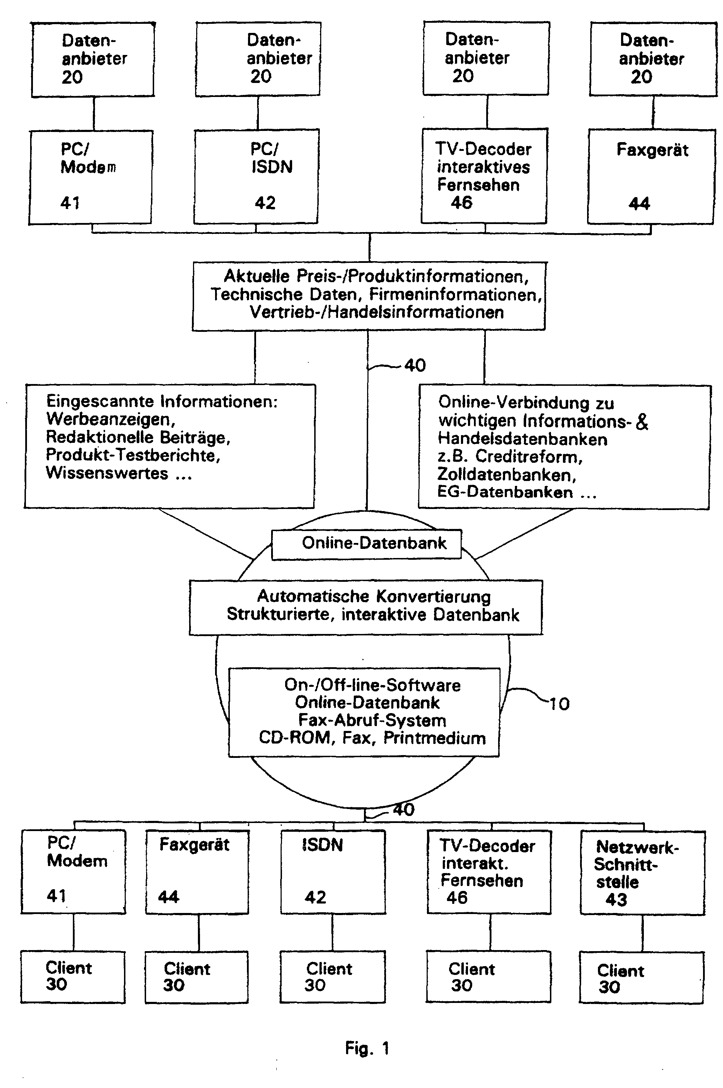

Das schematisch dargstellte System zum Datenaustausch in einem Netzwerk gemäß Fig. 1 weist einen Server 10 mit Datenspeicher auf, der nach Art einer strukturierten, interaktiven Datenbank organisiert ist. Im Datenspeicher sind Informationsdaten über Datenanbieter 20 speicherbar. Die gespeicherte Dateninformation ist von Clients (Datensuchenden) 30 abrufbar.

Anbieter 20 und Datensuchende 30 sind über Nachrichtenübertragungswege 40 mit dem Datenspeicher verbunden. Geeignete Nachrichtenübertragungswege sind beispielsweise das Telefonnetz, ISDN-Netz, Datennetze und Kabelfernsehnetze.

Der Datenspeicher weist eine in der Fig. 1 nicht dargestellte Eingabe- und Ausgabe-Anschluß-Einheit auf, mit der der Datenspeicher mit den verschiedenen Nachrichtenübertragungswegen 40 verbunden ist. Die Anbieter 20 und Datensuchenden 30 können über einen frei wählbaren Nachrichtenübertragungsweg 40 mit dem Datenspeicher verbunden sein. Sie sind dazu mit dem entsprechenden Endgerät ausgerüstet, wie beispielsweise einem PC mit Modem- 41 oder ISDN- 42 Anschluß, einer Netwerkschnittstelle 43, einem Fax-Gerät 44 oder einem TV-Decoder und Fernsehapparat 46. Der Server 10 konvertiert die im Datenspeicher in einem bestimmten Format vorliegende Dateninformation in das für die Übertragung zum/vom Teilnehmer benötigte Format. Ferner weist dieser eine Prüfeinrichtung auf, die von Teilnehmern ausgesendete Berechtigungscodes überprüft, so daß nur berechtigte Teilnehmer Zugriff auf den Datenspeicher haben.

Ein Datensuchender 30 hat gemäß Fig. 1 über sein Endgerät 41 - 46 und den Nachrichtenübertragungsweg 40 Zugang zum Datenspeicher und kann dort Dateninformation abrufen. Dabei handelt es sich z.B. um Angebote für bestimmte Produkte oder Dienstleistungen, die zuvor von den Anbietern 20 in die Datenbank eingegeben wurden. Daraufhin gibt der Datensuchende 30 eine Anfrage in die Datenbank ein, mit der er sich nach weitergehenden Informationen bezüglich der zuvor eingegebenen Angebote der Anbieter 20 erkundigt. Alternativ kann ein Datensuchender 30 jedoch auch eine Anfrage für ein bestimmtes Produkt oder eine Dienstleistung eingeben, ohne daß er sich auf zuvor eingegebene Angebote der Anbieter 30 bezieht oder ohne daß zuvor Angebote der Anbieter eingegeben wurden. Der Server leitet die Anfrage des Datensuchenden 30 auf die Endgeräte 41 - 44 der Anbieter 20 weiter, wobei die Anfage nur an diejenigen Anbieter 20 zugeleitet wird, die das betreffende Produkt bzw. die betreffende Dienstleistung anbieten. Die Auswahl der Anbieter 20 kann verdeckt erfolgen, d.h., daß der Datensuchende 30 keine Informationen über die Anbieter 20 im Laufe dieser Auswahl erhält. In diesem Fall erfährt der Datensuchende 30 die Identität der Anbieter 20 erst, wenn der Anbieter 20 dem Datensuchenden 30 eine Antwort zukommen lassen hat. Weiterhin kann die Auswahl nach Zugehörigkeit der Anbieter 20 zu bestimmten geographischen Regionen erfolgen. Die betroffenen Anbieter 20 können dann aufgrund der Übermittlung der Anfrage des Datensuchenden 30 durch ihre Endgeräte 41 - 44 die vom Datensuchenden 30 gewünschten Dateninformation in den Datenspeicher eingeben, welcher diese an den anfragenden Datensuchenden 30 weitervermittelt. Wird eine am Endgerät 41 - 44 eines Anbieters 20 gespeicherte Anfrage bis zu einem vorher bestimmten Zeitpunkt nicht beantwortet, indem der Anbieter 20 darauf reagiert und gewünschte Dateninformaiton an den anfragenden Intessenten 30 überträgt, dann wird automatisch eine Benachrichtigung des betroffenen Anbieters 20 vorgenommen. Dabei kann es sich z.B. um eine Bildschirmausgabe oder eine im Server abgespeicherte Nachricht handeln. Der Anbieter 20 wird durch diese Benachrichtigung zuverlässig auf das Vorliegen einer ihn betreffenden Anfrage eines Datensuchenden 30 aufmerksam gemacht.

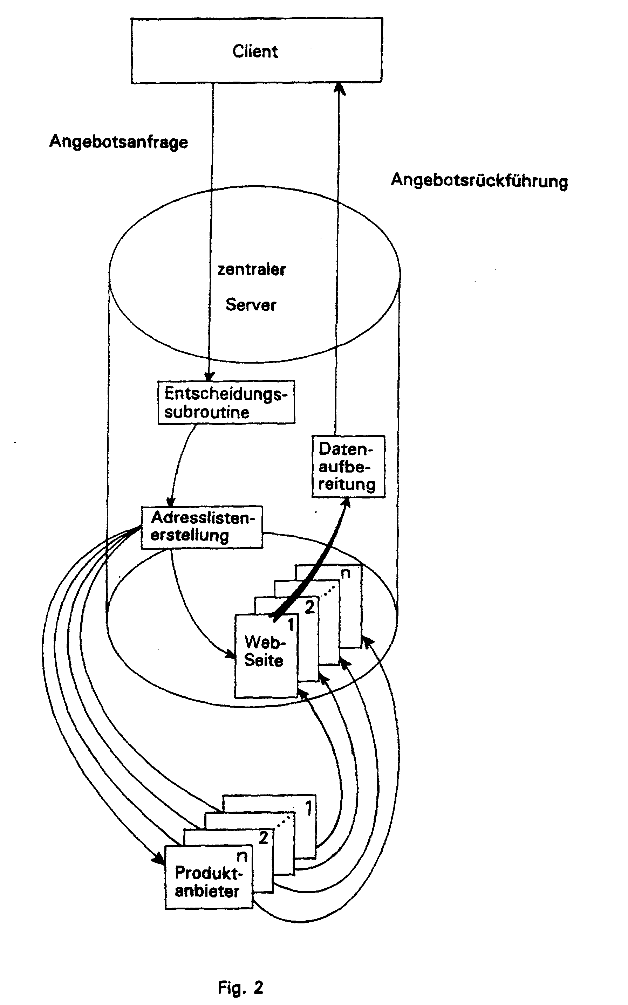

Das erfindungsgemäße Verfahren soll nun beispielhaft anhand von Fig. 2 erläutert werden.

Der als Client bezeichnete Kunde sucht das beste Angebot für einen Artikel, den er in seiner Angebotsanfrage genauer spezifiziert. Außerdem kann er zusätzliche Angaben bezüglich der abzugebenden Angebote bzw. Einschränkungen der zu berücksichtigenden Produktanbieter machen. Weiterhin kann der Kunde die Art der Angebotsrückführung, d.h. beispielsweise per E-mail, und die entsprechende Datenstruktur bei der Rückführung bei der Angebotsanfrage mit angeben und ein Zeitlimit für den späteren Eingang von Angeboten festlegen. Der Client ist über ein Netzwerk mit dem zentralen Server verbunden. Dort geht die Angebotsanfrage ein und wird zunächst von einer Entscheidungssubroutine bearbeitet. Die Entscheidungssubroutine überprüft zunächst, ob die in der Angebotsanfrage gemachten Spezifikationen direkt zur Erstellung einer Adressliste führen können oder ob mittels von Heuristiken eine entsprechende Adressliste erstellt werden kann. Bei einer Angebotsanfrage, die beispielsweise als Produkt einen 386-SX-Chip sucht, wird bei fehlender Übereinstimmung zwischen dem gesuchten Chip und den in der Produktliste vorhandenen Produkten die nächsthöhere Ebene, d.h. in diesem Beispiel die Produktgruppe CPU-Anbieter aufgerufen und die dort aufgelisteten Adressen für die Erstellung der Adressliste kopiert.

Nach Erstellung der Adressliste ist die Anzahl der möglichen Produktanbieter bekannt, d.h. damit die entsprechende Anzahl der zu vergebenden Paßwörter. Die Paßwörter werden mit der Angebotsanfrage an die entsprechenden Produktanbieter ausgegeben und eine der Anzahl der möglichen Anbieter entsprechende Anzahl n an virtuellen Web-Seiten wird auf dem Server bereitgestellt. Die an die jeweiligen Produktanbieter weitergeleitete Angebotsanfrage wird in der gewählten Kommunikationsform, d.h. Fax oder E-mail mit den zusätzlichen Informationen des Zeitlimits, des individuellen Paßworts und der Netzwerkadresse für die individuelle Web-Seite weitergeleitet.

Bei Aufrufung der Netzwerkadresse findet eine Paßwortabfrage statt, wonach sich die virtuelle Web-Seite, d.h. eine Eingabemaske öffnet, die für alle Produktanbieter gleich erscheint. Nach Eintrag der Angebotsdaten in die Eingabemaske werden die mittels des Paßworts dem Produktanbieter zugeordneten Angebotsdaten vom Server gespeichert und sind für den nächsten Produktanbieter, der die virtuelle Web-Seite aufruft, nicht sichtbar. Nach Ablauf des Zeitlimits werden keine Angebote unter der vergebenen Netzwerkadresse angenommen und die Daten aus den Web-Seiten werden in der Datenaufbereitung entsprechend den Anforderungen des Clients zusammengestellt und an diesen mittels E-mail oder Fax zurückgeführt.

Bei vollautomatischer Angebotseinholung wird auf Seiten des Produktanbieters ein Mailroboter eingesetzt, der vollautomatisch die Anfrage auswerten und beantworten kann. Hierbei werden einheitliche Artikelbezeichnungen in einem vorher definierten Format übertragen und die entsprechenden Suchvorgänge in der Datenbank des Produktanbieters vollautomatisch durchgeführt. Anschließend erfolgt der Verbindungsaufbau und Abgabe des Angebots an den zentralen Server ebenfalls vollautomatisch durch den Mailroboter.

## Patentansprüche

1. System zum Datenaustausch in einem Netzwerk, insbesondere zur automatischen Angebotseinholung, welches mindestens einen zentralen Server (10) mit einem Datenspeicher aufweist, der mit einer Eingabe-Anschluß-Einheit und einer Ausgabe-Anschluß-Einheit versehen ist, und mindestens einen Client und einen Datenanbieter (20, 30) zur Eingabe und/oder zum Abrufen von Dateninformation in den oder aus dem Datenspeicher des zentralen Servers (10) aufweist, die mit einer Eingabe- und/oder Ausgabe-Anschluß-Einheit über ein Netzwerk (40) mit Endgeräten (41-46) verbindbar sind, wobei der Server Module zur automatischen Auswahl von Datenanbietern in Abhängigkeit von einer Anfrage eines Clients, zur automatischen Weiterleitung der Anfrage an die Datenanbieter und zum Vergleich des Zeitpunkts des Eingangs der eingehenden Dateninformationen mit einem vom Client vorgegebenen Zeitlimit aufweist.

2. System nach Anspruch 1,
wobei
die von einem Client (30) erfragte Dateninformation Angebote für bestimmte Produkte oder Dienstleistungen sind.

3. System nach Anspruch 1,
wobei
der Server ein Modul zur verdeckten Zuleitung von Datenanfragen eines Clients (30) an Datenanbieter aufweist, so daß der ausgewählte Datenanbieter (20) keine Information über den Client erhält.

4. System nach Anspruch 1,
wobei
der Server ein Modul zur Auswahl von Datenanbietern (20) nach Regionen aufweist.

5. System nach Anspruch 1,
wobei
der Server (10) ein Modul zur automatischen Benachrichtigung eines Datenanbieters (20) aufweist, wenn eine an diesen weitergeleitete Anfrage eines Clients (30) nach Ablauf einer vorbestimmbaren Zeit unbeantwortet bleibt.

6. System nach Anspruch 1,
wobei
die Endgeräte PCs mit Modem (41), ISDN-Anschluß (42), Faxgeräte (44) oder TV-Decoder (46) eines interaktiven Fernsehens sind.

7. System nach Anspruch 1,
wobei
der Server ein Modul zur automatischen Konvertierung und Formatierung von Daten aufweist.

8. System nach Anspruch 1,
wobei
der Server mit externen Datenbanken verbunden ist.

9. Verfahren zum Datenaustausch in einem Netzwerk, insbesondere zur automatischen Angebotseinholung, welches mindestens einen Client, einen zentralen Server und einen Datenanbieter aufweist, wobei das Verfahren folgende Schritte aufweist:
(1) Datenanfrage eines Client an den zentralen Server unter Mitteilung eines vom Client für die Bereitstellung der Dateninformation gesetzten Zeitlimits;
(2) Erstellung einer Liste möglicher Anbieter aus einem Anbieterpool durch den Server in Abhängigkeit von den angefragten Daten;
(3) Verbindungsaufbau durch den Server und Übermittlung der Datenanfrage an mögliche Datenanbieter bei gleichzeitiger Übermittlung einer Netzwerkadresse für die Rückantwort;
(4) Empfang der gewünschten Daten von zumindest einem Teil der möglichen Datenanbieter durch den zentralen Server;
(5) Sammeln der bis zu dem von dem Client gesetzten Zeitlimit beim Server eingegangenen gewünschten Dateninformation oder Datenteilinformation durch den zentralen Server und Weiterleitung an den Client.

10. Verfahren zum Datenaustausch nach Anspruch 9,
wobei
der Server nach Ablauf des vom Client gesetzten Zeitlimits keine neuen Dateninformationen mehr annimmt.

11. Verfahren zum Datenaustausch nach Anspruch 9,
wobei
der zentrale Server Vorgaben des Clients bei der automatischen Erstellung der Liste möglicher Datenanbieter berücksichtigt.

12. Verfahren zum Datenaustausch nach Anspruch 9,
wobei
der zentrale Server die Dateninformation konvertiert und formatiert.

13. Verfahren zum Datenaustausch nach Anspruch 9,
wobei
der zentrale Server mehrere Anfragen verschiedener Clients parallel bearbeitet.

14. Verfahren zum Datenaustausch nach Anspruch 9,
wobei
der zentrale Server bei der Erstellung der Liste möglicher Datenanbieter Adresslisten externer Datenbanken abfragt.

15. Verfahren zum Datenaustausch nach Anspruch 9,
wobei
der zentrale Server Datenanfragen eines Clients in Sprach-, Fax- oder E-Mail-Anfragen an die möglichen Datenanbieter konvertiert.

16. Verfahren zum Datenaustausch nach Anspruch 9,
wobei
vom zentralen Server eine automatische Paßwortvergabe an den Datenanbieter erfolgt.

17. Verfahren zum Datenaustausch nach Anspruch 9,
wobei
der zentrale Server für jeden Datenanbieter automatisch eine virtuelle Web-Seite erzeugt.

18. Verfahren zum Datenaustausch nach Anspruch 17,
wobei
die Dateninformation nach Paßwortangabe des Datenanbieters in die vom Server automatisch erzeugte virtuelle Web-Seite eingetragen wird.

19. Verfahren zum Datenaustausch nach Anspruch 18,
wobei
Empfang und Bearbeitung der Datenanfrage durch den Datenanbieter sowie Eintragung der Dateninformation in die Web-Seite durch einen automatischen Prozeß erfolgt.

20. Verfahren zum Datenaustausch nach Anspruch 9,
wobei
die Verfahrensschritte von mehreren zentralen Servern im Netzwerk durchgeführt werden.

21. Verfahren zum Datenaustausch nach Anspruch 20,
wobei
die zentralen Server miteinander synchronisiert werden.

22. Verwendung einer Benutzeroberfläche für ein Verfahren nach einem der Ansprüche 9 bis 20 zur Offline-Erstellung von Datenanfragen an den zentralen Server und zum automatischen Einlesen der Dateninformation durch den Client.

23. Verwendung eines Verfahrens nach einem der Ansprüche 9 bis 20 für die automatische Angebotseinholung von Waren, wobei vom Server Index-Produktnummern erzeugt werden.

## Claims

1. A system for interchanging data in a network, in particular for obtaining quotations automatically, having at least one central server (10) with data memory, provided with an input connection unit and an output connection unit, and at least one client and one data provider (20, 30) for inputting and/or recalling data information into or from the data memory of the central server (10), which are connectable to an input and/or output connection unit through a network (40) with terminals (41 - 46), the server having modules for automatic selection of data providers in relation to an enquiry from a client, for automatic relaying of the enquiry to the data providers and for comparing the time of receipt of the incoming data information with a time limit set by the client.

2. A system according to Claim 1, whereby the data requested by a client (30) are quotations for specific products or services.

3. A system according to Claim 1, whereby the server is a module for masked feeding of enquiries for data from a client (30) to a data provider so that the selected data provider (20) receives no information about the client.

4. A system according to Claim 1, whereby the server has a module for selecting data providers (20) according to regions.

5. A system according to Claim 1, whereby the server (10) has a module for automatically notifying a data provider (20) when an enquiry from a client (30) passed on to it remains unanswered beyond a specifiable time.

6. A system according to Claim 1, whereby the terminals are PCs with modem (41), ISDN connection (42), fax units (44) or TV decoders (46) of interactive television.

7. A system according to Claim 1, whereby the server has a module for automatic conversion and formatting of data.

8. A system according to Claim 1, whereby the server is connected to external data banks.

9. A system for interchanging data in a network, in particular for obtaining quotations automatically, having at least one client, a central server and a data provider, the process having the following steps:
(1) Enquiry for data from a client sent to the central server stating a time limit set by the client for providing the data information.
(2) Producing a list of potential suppliers by the server from a pool of providers, related to the data requested.
(3) Building up connections by the server and transmission of the request for data to the potential data providers simultaneously transmitting a network address for the reply.
(4) Receiving the requested data by the central server from at least some of the potential data providers.
(5) Collecting the required data information received by the server or the partial data information received through the central server by the time set by the client and relaying it to the client.

10. A process for interchanging data according to Claim 9, whereby the server does not accept any new data information after expiry of the time limit set by the client.

11. A process for interchanging data according to Claim 9, whereby in preparing automatically the list of likely data providers, the central server takes into account the information given by the client.

12. A process for interchanging data according to Claim 9, whereby the data information is converted and formatted by the central server.

13. A process for interchanging data according to Claim 9, whereby the central server is processing several enquiries from various clients in parallel.

14. A process for interchanging data according to Claim 9, whereby the central server scans the address lists of external data banks when of preparing a list of potential data providers.

15. A process for interchanging data according to Claim 9, whereby the central server converts data enquiries from a client into speech, fax or e-mail enquiries to the potential data providers.

16. A process for interchanging data according to Claim 9, whereby an automatic password is issued by the central server to the data provider.

17. A process for interchanging data according to Claim 9 whereby the central service automatically produces a virtual web site for each data provider.

18. A process for interchanging data according to Claim 17, whereby data information is automatically entered into the virtual web site automatically produced by the server, after the data provider's password is given.

19. A process for interchanging data according to Claim 18, whereby the data enquiry is received and processed by the data providers and the data information entered in the web site by an automatic process.

20. A process for interchanging data according to Claim 9, whereby the process stages are carried out by several central servers in the network.

21. A process for interchanging data according to Claim 20, whereby the central servers are synchronised with each other.

22. Using a user interface for a process according to one of the Claims 9 to 20 for preparing offline data enquiries to the central server and for automatic reading-in of data information by the client.

23. Using a process according to one of the Claims 9 to 20 for obtaining quotations automatically for goods, the index product numbers being generated by the server.

## Revendications

1. Système d'échange de données dans un réseau, en particulier pour la recherche automatique d'offres, comprenant au moins un serveur central (10) avec une mémoire de données, muni d'une unité de connexion d'entrée et d'une unité de connexion de sortie, et au moins un client et un fournisseur de données (20, 30) pour introduire et/ou appeler des informations de données dans la mémoire de données du serveur central (10), qui peuvent être connectés à une unité de connexion d'entrée et/ou de sortie par l'intermédiaire d'un réseau (40) avec des terminaux (41-46), dans lequel le serveur comporte des modules pour la sélection automatique de fournisseurs de données en fonction d'une demande d'un client, pour la transmission automatique de la demande aux fournisseurs de données et pour la comparaison de l'époque de l'entrée des informations de données avec une limite de temps imposée par le client.

2. Système selon la revendication 1, dans lequel les informations de données demandées par le client (30) concernent des offres pour des produits ou des services déterminés.

3. Système selon la revendication 1, dans lequel le serveur comporte un module pour l'acheminement masqué de demandes de données d'un client à des fournisseurs de données, de telle sorte que le fournisseur de données (20) ne reçoive aucune information le client.

4. Système selon la revendication 1, dans lequel le serveur comporte un module pour la sélection de fournisseurs de données (20) par régions.

5. Système selon la revendication 1, dans lequel le serveur comporte un module pour l'avertissement automatique d'un fournisseur de données (20) lorsqu'une demande d'un client (30) transmise au fournisseur reste sans réponse après qu'un un laps de temps prédéterminé se soit écoulé.

6. Système selon la revendication 1, dans lequel les terminaux sont des PC équipés de modems (41), des connexions RNIS (42), des fax (44), ou le décodeur TV (46) d'un appareil de télévision interactif.

7. Système selon la revendication 1, dans lequel le serveur comporte un module pour le formatage et la conversion automatique de données.

8. Système selon la revendication 1, dans lequel le serveur est connecté à des banques de données externes.

9. Procédé pour l'échange de données dans un réseau, en particulier pour la recherche automatique d'offres, comprenant au moins un client, un serveur central et un fournisseur de données, ledit procédé comprenant les étapes suivantes :
1) demande de données d'un client au serveur central avec indication d'une limite de temps imposée par le client pour la fourniture des informations de données ;
2) établissement par le serveur, en fonction des données demandées, d'une liste de fournisseurs potentiels à partir d'un pool de fournisseurs ;
3) établissement de liaisons par le serveur et transmission de la demande de données à des fournisseurs potentiels accompagnée de la transmission simultanée d'une adresse réseau pour la réponse ;
4) réception par le serveur central des données souhaitées d'au moins une partie des fournisseurs de données potentiels ;
5) collecte par le serveur central des informations de données ou des informations partielles de données souhaitées entrées dans la limite de temps souhaitée et transmission de celles-ci.

10. Procédé d'échange de données selon la revendication 9, dans lequel le serveur central après expiration de la limite de temps fixée par le client n'accepte plus d'informations de données nouvelles.

11. Procédé d'échange de données selon la revendication 9, dans lequel le serveur central tient compte d'indications du client dans l'établissement automatique de la liste des fournisseurs de données potentiels.

12. Procédé d'échange de données selon la revendication 9, dans lequel le serveur central convertit et formate les informations des données.

13. Procédé d'échange de données selon la revendication 9, dans lequel le serveur central traite en parallèle plusieurs demandes de clients différents.

14. Procédé d'échange de données selon la revendication 9, dans lequel le serveur central, pour l'établissement de la liste des fournisseurs de données potentiels, interroge des listes d'adresses de banques de données externes.

15. Procédé d'échange de données selon la revendication 9, dans lequel le serveur central convertit des demandes de données d'un client formulées sous formes de demandes vocales, par fax ou par courrier électronique pour les fournisseurs de données potentiels.

16. Procédé d'échange de données selon la revendication 9, dans lequel le serveur central procède à une attribution automatique de mot de passe.

17. Procédé d'échange de données selon la revendication 9, dans lequel le serveur génère une page web virtuelle de manière automatique pour chaque fournisseur de données.

18. Procédé d'échange de données selon la revendication 17, dans lequel l'information de données après indication du mot de passe est inscrite dans la page web virtuelle générée de manière automatique.

19. Procédé d'échange de données selon la revendication 18, dans lequel la réception et le traitement de la demande de données par le fournisseur de données, ainsi que l'inscription des informations de données dans la page web, sont réalisées par un processus automatique.

20. Procédé d'échange de données selon la revendication 9, dans lequel les étapes du procédé sont exécutées par plusieurs serveurs centraux dans le réseau.

21. Procédé d'échange de données selon la revendication 20, dans lequel les serveurs centraux sont synchronisés entre eux.

22. Utilisation d'une interface utilisateur pour un procédé selon une des revendications 9 à 20 pour la mise au point offline de demandes de données au serveur central et pour la lecture automatique des informations de données par le client.

23. Utilisation d'un procédé selon une des revendications 9 à 20 pour la recherche automatique d'offres de produits, dans lequel 1c serveur génère un index de références produit.
